Europäisches Patentamt

(19) European Patent Office

Office européen des brevets

(11) Publication number: **0 298 273**

**A1**

(12) # EUROPEAN PATENT APPLICATION

(21) Application number: 88109266.2

(51) Int. Cl.⁴: **H02K 15/02**

(22) Date of filing: 10.06.88

(30) Priority: 06.07.87 US 69723

(43) Date of publication of application:
**11.01.89 Bulletin 89/02**

(84) Designated Contracting States:
**BE ES FR IT**

(71) Applicant: **WESTINGHOUSE ELECTRIC
CORPORATION**
**Westinghouse Building Gateway Center
Pittsburgh Pennsylvania 15222(US)**

(72) Inventor: **Shih, True-Tsai**
**1200 Wolverine Trail**
**Winter Springs Florida 32708(US)**
Inventor: **Murphy, Robert L.**
**7446 Pinemont Drive**
**Orlando Florida 32819(US)**

(74) Representative: **Casalonga, Axel et al**
**BUREAU D.A. CASALONGA - JOSSE**
**Morassistrasse 8**
**D-8000 Munich 5(DE)**

(54) **Shaft retaining ring.**

(57) An assembly composed of a shaft (12) of an electrical machine, which shaft (12) has a longitudinal axis and an outer surface of circular cross-section, and a retaining ring (4) having a longitudinal axis, a free end, and an inner surface (20, 30, 40) extending from the free end along the longitudinal axis, via which inner surface (20, 30, 40) the ring (4) is to be secured to the outer surface of the shaft (12) by a shrink fit procedure in which the ring (4) is heated to radially expand its inner surface (20, 30, 40), the heated inner surface (20, 30, 40) of the ring (4) is placed around the outer surface of the shaft (12), and the ring (4) is cooled to create a compressive fit between the inner surface (20, 30, 40) of the ring (4) and the shaft (12), wherein at least a portion of the inner surface (20, 30, 40) of the ring (4) is configured, prior to being heated and placed around the shaft (12), so that the diameter of the portion varies progressively relative to the diameter of the corresponding portion of the shaft outer surface such that upon achievement of the compressive fit, the degree of shrink fit along the portion of the inner surface (20, 30, 40) decreases in the direction away from the free end of the ring (4).

FIG. 2a.

# SHAFT RETAINING RING

The present invention relates to retaining rings of the type which are secured to the rotor shaft of an electric machine, such as a motor or generator.

It is common practice to secure a retaining ring to a rotor shaft of a motor or generator by shrink fitting a free end of the retaining ring onto the outer surface of the shaft. This is achieved by providing a retaining ring having a bearing surface which initially, at ambient temperatures, has a smaller diameter than the outer surface of the rotor shaft. The ring is then heated so that it expands until the diameter of the bearing surface becomes greater than that of the outer surface of the shaft. The free end is then placed around the shaft and permitted to cool, whereupon it shrinks and tightly contacts the outer shaft surface.

The bearing surface does not return to its original size, but assumes a somewhat larger final diameter corresponding to the diameter of the shaft outer surface, which is compressed somewhat by the retaining ring. The difference between the initial diameter of the bearing surface of the retaining ring and the outer diameter of the associated shaft portion, prior to heating the ring and placing it around the shaft surface, is known as the degree of shrink fit.

In machines of the type under consideration, the rotor shaft is provided, at its periphery, with axial winding slots separated by teeth and it has been found that cracks develop in these teeth. When this occurs, the machine must be discarded or the shaft must be repaired and the retaining ring replaced.

It is an object of the present invention to eliminate the source of such cracking failures.

The above and other objects are achieved according to the invention, by an assembly comprising a shaft of an electrical machine, which shaft has a longitudinal axis and an outer surface of circular cross-section, and a retaining ring having a longitudinal axis, a free end, and an inner surface extending from the free end along the longitudinal axis, via which inner surface the ring is to be secured to the outer surface of the shaft by a shrink fit procedure in which the ring is heated to radially expand its inner surface, the heated inner surface of the ring is placed around the outer surface of the shaft, and the ring is cooled to create a compressive fit between the inner surface of the ring and the shaft, wherein at least a portion of the inner surface of the ring is configured, prior to being heated and placed around the shaft, so that the diameter of the portion varies progressively relative to the diameter of the corresponding portion of the shaft outer surface such that upon achievement of the compressive fit, the degree of shrink fit along the portion of the inner surface decreases in the direction away from the free end of the ring.

Figure 1a is a cross-sectional view of a retaining ring and shaft according to the prior art;

Figures 1b and 1c are diagrams illustrating the characteristics of the shrink fit between the components of Figure 1a;

Figures 2a-2c are views similar to those of Figures 1a-1c, but relating to an embodiment of the invention;

Figure 3 is a cross-sectional detach view of the bearing surface region of a further embodiment of a retaining ring according to the invention;

Figure 4 is a view similar to that of Figure 3 of another embodiment of the invention; and

Figure 5 is a view similar to that of Figure 2a of another embodiment of the invention.

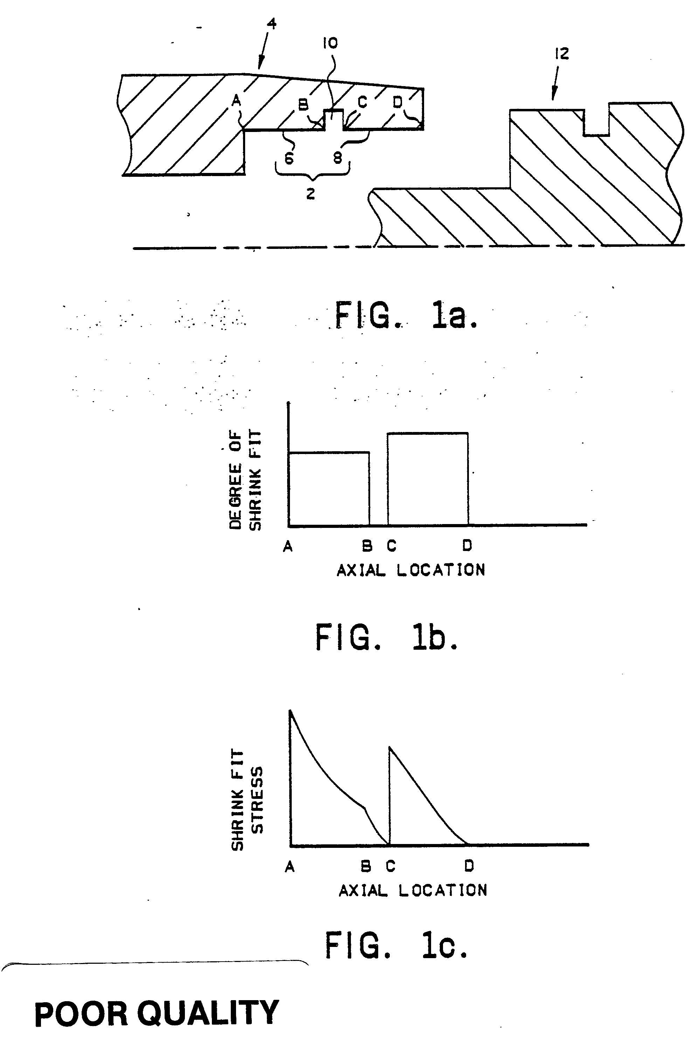

It is known to employ a two-step shrink fit in that, as shown in Figure 1a, the bearing surface 2 of retaining ring 4 is composed of two portions 6 and 8 having end points A, B, C, D, with points B and C being separated by a keyway 10. Surface 2 is to be shrink-fitted onto the cylindrical outer surface of a rotor shaft 12, which outer surface has two portions with respectively different diameters, the diameter of the portion which is to contact portion 8 being larger than that of the other shaft surface portion.

Initially, both portions 6 and 8 have the same diameter, which is smaller than that of the outer surface of shaft 12 so that upon completion of the shrink-fitting procedure, the degree of shrink fit of portion 8 is greater than that of portion 6, as shown in Figure 1b.

Shaft 12 has a keyway in its outer surface which will be aligned with keyway 10 at the completion of assembly of ring 4 with shaft 12. A key is installed in the keyways in a conventional manner.

In machines of the type under consideration, the rotor shaft is provided, at its periphery, with axial winding slots separated by teeth and it has been found that cracks develop in these teeth. When this occurs, the machine must be discarded or the shaft must be repaired and the retaining ring replaced.

The inventors have determined that this cracking appears to result from localized shrink fit stress peaks, as shown in Figure 1c, at the end A, C of each of portions 6 and 8 which is remote from the free end of retaining ring 4.

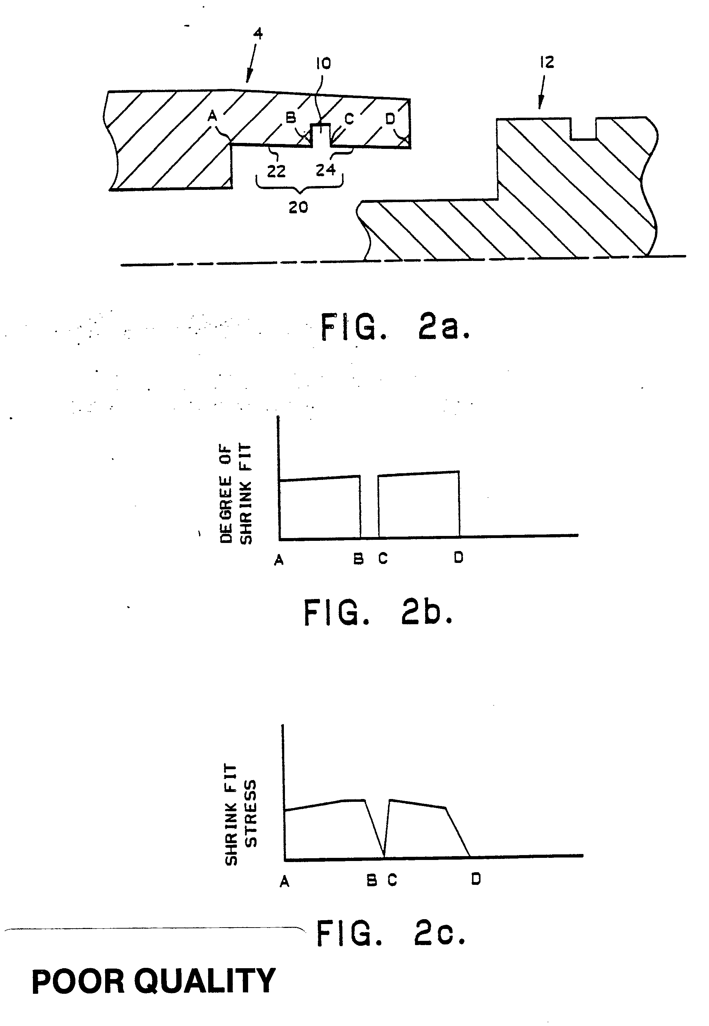

In the embodiment of the invention shown in Figure 2a, retaining ring 4 is provided with a bearing surface 20 which is interrupted by keyway 10 and tapers radially inwardly from point A to point D at the free end of bearing surface 20. In this embodiment, bearing surface 20 is composed of two portions 22 and 24 which lie on a common conical surface. The outer surface of shaft 12 here has a constant diameter in the region to be contacted by surface 20.

When ring 4 has been shrink fitted onto shaft 12, the degree of shrink fit will have the form shown in Figure 2b and the resulting shrink fit stress will be as shown in Figure 2c.

As is apparent from Figure 2c, the structure according to the invention permits localized stress peaks to be substantially reduced.

According to an exemplary embodiment of the invention, where the outer surface of shaft 12 is cylindrical, surface portions 22 and 24 lie on a common conical surface, and surface 20 has an axial length of the order of 10 cm, and is tapered such that, before shrink fitting, the diameter at point D is 2.5 mm less than the diameter of the outer surface of shaft 12 and the diameter at point A is 2 mm less than the diameter of the outer surface of shaft 12.

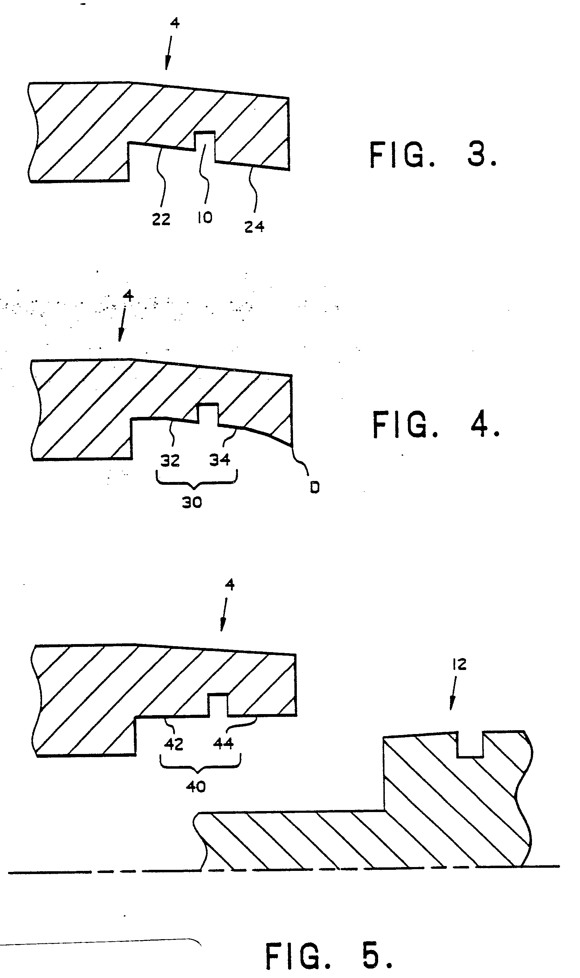

The embodiment of Figure 2a represents the most economical manner of implementing the invention. However, further improvements could be achieved by constructing ring surface 20 to provide a two-step shrink fit in that portion 24 lies on a conical surface spaced radially inwardly of the conical surface on which portion 22 lies, as shown in Figure 3.

Alternatively, a two-step shrink fit could be achieved by giving ring 4 the form shown in Figure 2a and shaft 12 the form shown in Figure 1a.

A more uniform stress distribution could be achieved by providing ring 4 with a bearing surface 30 composed of portions 32 and 34, which bearing surface has the form of a portion of a parabola which is centered on the retaining ring axis and opens toward the end of ring 4 remote from point D, as shown in Figure 4.

It is equally possible to give shaft 12 a tapered outer surface and to give portions 42 and 44 of bearing surface 40 a cylindrical form, as shown in Figure 5. The tapered surface of shaft 12 could be conical, as shown in Figure 5, or could even have the form of a parabola which opens to the right. It will be appreciated that this solution, while more costly, produces the same result as described earlier with reference to Figure 2. It would also be possible, in this case, to give bearing surface 40 a taper which is less pronounced than that provided when shaft 12 has a cylindrical outer surface.

It can thus be stated that the invention, in its broadest aspects, resides in the creation of a novel relation between the configuration of the outer surface of shaft 12 and the configuration of surface 20, 30, or 40 to reduce stress peaks in the region where the surfaces are joined.

The embodiments of Figures 4 and 5 could be modified by offsetting surface portion 34 or 44 radially inwardly from surface portion 32 or 42, respectively, or by offsetting the corresponding portions of the outer surface of shaft 12, as generally shown in Figure 1a.

An improved shrink fit coupling can even be achieved, according to the principle underlying the invention, by tapering only surface portion 22 relative to the outer surface of shaft 12 since it is this surface portion of the known ring which produces the highest stress peak.

It will be understood that the above description of the present invention is susceptible to various modifications, changes, and adaptations, and the same are intended to be comprehended within the meaning and range of equivalents of the appended claims.

## Claims

1. An assembly comprising a shaft (12) of an electrical machine, which shaft (12) has a longitudinal axis and an outer surface of circular cross-section, and a retaining ring (4) having a longitudinal axis, a free end, and an inner surface (20, 30, 40) extending from said free end along the longitudinal axis, via which inner surface (20, 30, 40) said ring (4) is to be secured to said outer surface of said shaft (12) by a shrink fit procedure in which said ring (4) is heated to radially expand its inner surface (20, 30, 40), the heated inner surface (20, 30, 40) of said ring (4) is placed around said outer surface of said shaft (12), and said ring (4) is cooled to create a compressive fit between said inner surface (20, 30, 40) of said ring (4) and said shaft (12), characterized in that at least a portion of said inner surface (20, 30, 40) of said ring (4) is configured, prior to being heated and placed around said shaft (12), so that the diameter of said portion varies progressively relative to the diameter of the corresponding portion of said shaft outer surface such that upon achievement of the compressive fit, the degree of shrink fit along said portion of said inner surface (20, 30, 40) decreases in the direction away from said free end of said ring (4).

2. An assembly as defined in claim 1 further characterized in that said outer surface of said shaft (12) is cylindrical and said inner surface (20, 30) of said ring (4) has a diameter which progressively decreases in the direction toward said free end of said ring (4).

3. An assembly as defined in claim 2 further characterized in that said inner surface (20) of said ring (4) has a conical form.

4. An assembly as defined in claim 2 further characterized in that said inner surface (30) of said ring (4) has a parabolic form.

5. An assembly as defined in claim 2 further characterized in that said inner surface (20, 30) of said ring (4) has two portions (22, 24; 32, 34) spaced apart along the longitudinal axis of said ring (4), with one of said portions (24; 34) extending to said free end of said ring (4) and being spaced radially inwardly from the other one of said portions (22; 32).

6. An assembly as defined in claim 1 further characterized in that said outer surface of said shaft (12) is conical.

7. An assembly as defined in claim 1 further characterized in that said outer surface of said shaft (12) has a parabolic form.

8. An assembly as defined in claim 7 further characterized in that said inner surface (20, 30) of said ring (4) has two portions (22, 24; 32, 34) spaced apart along the longitudinal axis of said ring, with one of said portions (24, 34) extending to said free end of said ring (4) and being spaced radially inwardly from the other one of said portions (22, 32).

# FIG. 1a.

# FIG. 1b.

# FIG. 1c.

POOR QUALITY

FIG. 2a.

FIG. 2b.

FIG. 2c.

**POOR QUALITY**

FIG. 3.

22    10    24

FIG. 4.

32    34

30

D

FIG. 5.

12

42    44

40

POOR QUALITY

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 151 430 (W.H. STARK)<br>* abstract; figures 5,7,8 * | 1-4,6,7 | H 02 K 15/02 |
| Y | US-A-3 879 828 (A. TROOST)<br>* column 5, lines 14-58; figure 2 * | 1-4,6,7 | |

TECHNICAL FIELDS
SEARCHED (Int. Cl.4)

H 02 K  15/00
H 02 K   1/00
H 02 K  21/00
B 23 P  11/00
F 16 B   4/00

The present search report has been drawn up for all claims

| Place of search | Date of completion of the search | Examiner |
|---|---|---|
| BERLIN | 30-09-1988 | LEOUFFRE M. |

EPO FORM 1503 03.82 (P0401)